# EUROPEAN PATENT SPECIFICATION

(11) **EP 2 361 832 B1**
(45) Date of publication and mention of the grant of the patent: **29.05.2013**
(21) Application number: 10400009.6
(22) Date of filing: 18.02.2010
(51) Int. Cl.: B64D 43/00, G02B 27/01

(54) **Cockpit for an aircraft**
Cockpit für ein Luftfahrzeug
Post de pilotage d'un aéronef

(43) Date of publication of application: 31.08.2011
(73) Proprietor: EUROCOPTER DEUTSCHLAND GmbH, 86609 Donauwörth (DE)
(72) Inventor: Kreitmair-Steck, Wolfgang, 85521 Ottobrunn (DE); Haisch, Stefan, 85521 Ottobrunn (DE)
(74) Representative: Pouillot, Laurent Pierre Paul

(56) References cited:
- EP-A1- 1 491 444
- EP-A2- 0 283 926
- WO-A2-2004/034373
- FR-A1- 2 834 057
- GB-A- 2 049 984
- US-B2- 6 686 850

## Description

The invention relates to a cockpit for an aircraft, particularly for a helicopter, with the features of the preamble of claim 1.

Dashboards in cockpits of conventional aircrafts are covering a broad range of the pilot's view to the outside this being particularly disadvantageous for landings and take-offs during which the view to the outside is of special relevance for the pilot and/or the crew onboard.

A modern airplane like the A400M is provided with two HUD= Head up Display. These HUD are designed with lucent guidance displays replacing Primary Flight Display (PFD). With HUD the pilot may use the head down displays for different purposes than guidance. A400M allows the pilot to select the information to be presented on the display and the pilot may arrange the displays according to the priorities of the flight situation.

DE 19704740 A1 discloses a holographic display screen for laser projection of at least one or more laser wavelengths, which selectively diffuses the incident narrow-band laser beam at a predetermined solid angle and simultaneously lets the wide-band ambient light through unobstructed. Said display screen - for use in cockpits of aircrafts and vehicles - has at least one holographic phase grid which is optically coupled to a transparent backing plate. The resulting holographic display screen may be tuned with respect to the distribution of brightness and may be focussed to endless. The displays of this holographic display screen can not be operated and controlled independently and they have a relatively high consumption of electrical power.

The document WO2004034373 A2 discloses systems and methods for providing an enhanced head up display to an aircraft pilot for increasing pilot situational awareness during flight, particularly when the visibility outside is very poor. The system of the document WO2004034373 A2 includes a navigational component
that determines one or more of an aircraft location and attitude and also includes a scene generator that produces one or more virtual images of the space into which the aircraft is flying. The system of WO2004034373 A2 discloses HUDs that can be pivoted and have one constant transparency.

The document FR 2834057 A1 discloses a navigation assistance device with an error calculator that determines an ETA for the aircraft at a destination (WPTRTA) for which a required time of arrival (RTA) has been established in advance by calculating a temporal error between the ETA and RTA; a converter then converts the temporal error into a distance error, based on the aircraft velocity; and a display for the calculated distance error.

The document GB 2049984 A discloses a display arrangement, suitable for use in vehicles, e.g. aircraft, comprising a head-up display (HUD) system incorporating the usual combiner and projector and in addition a light reflective element disposed between the observer and the HUD projector for presenting to the observer an image of a display, produced by a second projector, which appears to be located in the direction of the HUD projector.

The document US 2002145543 A1 discloses a system of pitch attitude symbols, which can be generated by a head-up display unit of an air vehicle. The system of pitch attitude symbols can be displayed by the head-up display as a virtual image in the direction of flight, behind the cockpit screen in a focal plane in front of the background. An unequivocal system of pitch attitude symbols is provided for the pilot, for a display area of an HUD, which display area is arranged below the natural horizon during neutral flight attitude of an air vehicle. Within the focal plane, the system of pitch attitude symbols comprises at least one pitch attitude representation area, arranged in perspective, which pitch attitude representation area can always be arranged parallel to the surface of the earth.; The rear edge of the pitch attitude representation area is tiltably fixed in a rear edge axis and, depending on the pitch attitude of the air vehicle, the pitch attitude representation area can be tilted on the focal plane. The front edge shows the pitch attitude in relation to an angular-degree scale.

The document EP 1 491 444 A1 discloses a display system with a layout of controls that may be changed straightforwardly by operating the computer controller and by displaying the control layout on a touch sensitive screen. A test pilot or other vehicle operator can realise a true appreciation of the control layout during testing, before or instead of needing to build a model control layout. Because a plurality of projectors are used to display the images of controls on the back of the screen, the display screen may be of generally the same large size, and preferably the same shape as the depicted control layout, whilst achieving a good quality display.

The document EP 0283926 A2 discloses a console with an instrument panel on a frame on a hollow base and the instrument panel covers the end face of the frame, which is fashioned as a hollow box component and whose cross-sectional profile corresponds to the contour of the instrument panel in order to obtain as much free space as possible for instrumenting the latter at the rear.

It is an object of the present invention to provide for a cockpit of an aircraft particularly a cockpit for a helicopter allowing better visibility for the pilot to the exterior of the cockpit and avoiding the disadvantages of the state of the art.

A solution is provided with a cockpit with the features of claim 1. Preferred embodiments of the invention are presented in the subclaims.

According to the invention a cockpit for an aircraft is provided with a windscreen and a dashboard. At least one extension of the dashboard is provided preferably being added laterally to the dashboard with at least a part of these extensions being transparent. At least one optical element is provided for creating at least one virtual image, namely a display on the transparent extension of the dashboard. The transparency of the extension is adjustable to match detected specific flight situations and/or ambient light intensity. The invention relates to a cockpit for an aircraft, particularly for a helicopter, with transparent displays for various control tools for flight operation. The displays on the transparent extension may be used to present important information to the pilot thus substituting the display of information on the dashboard and consequently allowing the installation of a less bulky dashboard in the cockpit. The transparency of the extension is changeable automatically or via pilot commands depending on flight operations and environmental needs such that the information may be presented partly transparent or opaque. The invention has the advantage of allowing large area displays preferably in landscape format for optimized information of the pilot inside the cockpit without impeding the sight of the pilot out of the cockpit onto the landscape ahead particularly without hindering the sight of the pilot by the dashboard to the airfield for take-off and landing. The displays can be presented independently and the displays on the adjustably transparent extensions can be operated with little electric consumption, particularly if the display is limited to a predefined, restraint area of visibility as may be appropriate for displays dedicated to the pilot's exclusive use.

According to a preferred embodiment of the invention at least a part of the transparent area of the dashboard comprises at least one pane of glass with such panes being mounted laterally to at least one side of the dashboard.

According to a further preferred embodiment of the invention a windscreen is provided with at least a part of the piloting information being projected into this windscreen for improved situation awareness e.g. visibility from the cockpit to the surrounding of the helicopter while the transparent dashboard is displaying various control tools for flight operation.

According to a further preferred embodiment of the invention at least a part of the extension of the dashboard is made of preferably electrically adjustable transparent material with the transparency of the dashboard being changeable automatically or via pilot commands.

According to a further preferred embodiment of the invention the virtual image is created by projection , e. g. holographic, conventional or by overlaying a transparent foil display onto the adjustable transparent material made of LED, particularly OLED technology, allowing separate operation and control of each display with consequent possibilities of redundant system-design as well as very low display weight. Projection from behind onto a holographic display area according to the invention has the advantage of allowing the limitation of the information onto a defined area of sight with the possibility of saving electrical power and allows focussing to infinity with remarkable advantages on behalf of the pilot as to the reduced necessity for adaption of the eyes of the pilot.

According to a further preferred embodiment of the invention the extension of the dashboard is provided with touch-screen functions for push buttons.

According to a preferred embodiment of the invention the adjustably transparent area is exclusively arranged on the pilot's side or on the left-hand and right-hand side with respect to the central area. In a flight situation such as take-off or landing, during which the pilot is supposed to pay special attention to the surrounding outside, the visibility of the displays on the dashboard may be adjusted to an extent that allows the pilot to recognize the landscape through the adjustably transparent extensions of the windscreen/dashboard of the cockpit. Control of the discernibility may be provided automatically by the system of the helicopter and/or may be tuned or overruled by the pilot. In flight situations, during which the surrounding outside is less interesting such as for example at cruising operations in safe heights, the displays may be tuned to dark and the respective brightness of the displays may be adapted.

According to a preferred embodiment of the invention at least one optical element directing light to the respective transparent area of the extension(s) of the dashboard is arranged centrally in the mid-area of the dashboard.

A preferred embodiment of the invention is presented in the attached drawing.

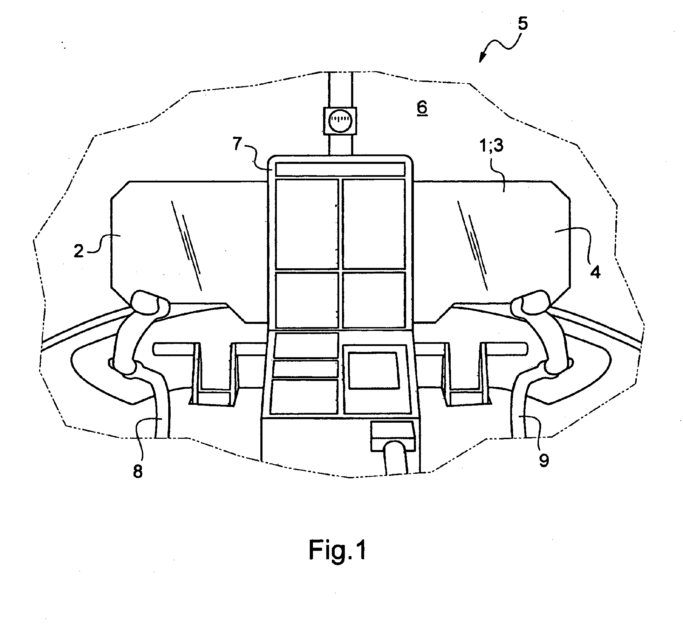

Fig. 1 shows a cockpit according to the invention.

Fig. 1: A cockpit 5 of a helicopter is provided with a windscreen 6 and a centrally arranged dashboard 7 with instruments, displays and control devices. Control columns 8, 9 are provided on either side of the dashboard 7. The dashboard 7 is provided with extensions 10, 11 mounted laterally to either side of the dashboard 7. The extensions 2, 3 comprise a pane of glass. The extensions 2, 3 are provided with an adjustably transparent area 1 with an eclipsed information (not shown) and an eclipsed display (not shown) as virtual images provided from an optical element (not shown) directing light to the adjustably transparent area 1 made of electrically adjustable transparent glass.

The virtual images are either created on the adjustably transparent area 1 by projection from behind onto the transparent area 1, e. g. holographic. Virtual images provided by holographic means are infinitely focussed in the direction of view of the pilot, i. e. focussed to at least more than 5 m or the adjustably transparent area 1 may be made by a conventional technique e.g. LED or the like or equipped with transparent displays of foil(s) made of LED-, particularly OLED-technology.

The display is provided as Primary Flight Display or Synthetic Vision Display. A push button 4 is provided by touch-screen means on the adjustably transparent area 1 and/or on the dashboard 7.

The information display to the pilot by the extensions 2, 3 with the adjustably transparent area 1 may be improved by a procjection of additional information into the windscreen 6.

The information and display may be tuned up to entirely transparent by a pilot of the helicopter or may be automatically adapted by an onboard control depending from the relevance or the needs of the situation.

The representation of a landscape in the display or on the windscreen from a point of view of the pilot may be tuned in a way to be congruent with the landscape outside and is focussed at infinity in order to provide an optimized variation between external sight or more sight directly onto the display for less change/adaption of the eyes of the pilot between external sight and display information. In case of congruent landscape and representation a semi-transparent setting of the display information may be suitable.

## Claims

1. A cockpit (5) for an aircraft, particularly for a helicopter, with a dashboard (7) with instruments, displays and control devices and at least one extension (2, 3) of the dashboard (7), **characterized in that** the at least one extension (2, 3) of the dashboard (7) is added laterally to the dashboard (7) and is provided with at least one partly transparent area (1) and **in that** the transparency of this transparent area (1) of the at least one extension (2, 3) is adjustable.

2. A cockpit (5) according to claim 1,
**characterized in that** at least a part of the transparent area (1) of the dashboard (7) comprises a pane of glass.

3. A cockpit (5) according to claim 1 or 2,
**characterized in that** a windscreen (6) is provided with at least a part of the transparent area (1) of the dashboard (7) being integrated into this windscreen (6).

4. A cockpit (5) according to claim 1,
**characterized in that** the transparent area (1) of the dashboard (7) is made of preferably electrically adjustable transparent material.

5. A cockpit (5) according to any of the preceding claims,
**characterized in that** a control is provided for automatic adjustment of the transparency the control being apt to be overruled by the pilot.

6. A cockpit (5) according to any of the preceding claims,
**characterized in that** at least one virtual image is created by projection onto the transparent area (1) of the extensions (2, 3) to the dashboard (7), e. g. holographic, conventional or by LED, particularly OLED technology.

7. A cockpit (5) according to claim 6,
**characterized in that** at least a part of the at least one virtual image is infinitely focussed.

8. A cockpit (5) according to any of the preceding claims,
**characterized in that** touch-screen functions (4) are provided in the transparent area (1) of the extensions (2, 3) of the dashboard (7).

9. A cockpit (5) according to any of the preceding claims,
**characterized in that** the transparent area (1) of the extensions (2, 3) of the dashboard (7) is exclusively arranged on the pilot's side or on the left-hand and right-hand side with respect to a central area.

10. A cockpit (5) according to any of the preceding claims,
**characterized in that** at least one optical element is arranged centrally in a mid-area of the dashboard (7) directing light to the transparent area (1) of the dashboard (7).

## Patentansprüche

1. Ein Cockpit (5) für ein Flugzeug, vor allem für einen Hubschrauber, mit einem Instrumentenbrett (7) mit Instrumenten, Anzeigen und Steuergeräten sowie zumindest einer Erweiterung (2, 3) des Instrumentenbretts (7), die sich dadurch auszeichnet, dass sie seitlich am Instrumentenbrett (7) ergänzt wird und mindestens einen teilweise durchsichtigen Bereich (1) aufweist, wobei die Durchsichtigkeit dieses durchsichtigen Bereichs (1) dieser mindestens einen Erweiterung (2, 3) einstellbar ist.

2. Ein Cockpit (5), gemäß Patentanspruch 1,
welches sich dadurch auszeichnet, dass zumindest ein Teil des durchsichtigen Bereichs (1) des Instrumentenbretts (7) eine Glasscheibe enthält.

3. Ein Cockpit (5), gemäß Patentanspruch 1 oder 2,
welches sich dadurch auszeichnet, dass es eine Windschutzscheibe (6) umfasst, und zumindest ein Teil des durchsichtigen Bereichs (1) des Instrumentenbretts (7) in dieser Windschutzscheibe (6) integriert ist.

4. Ein Cockpit (5), gemäß Patentanspruch 1,
welches sich dadurch auszeichnet, dass der durchsichtige Bereich (1) des Instrumentenbretts (7) vorzugsweise aus elektrisch justierbarem, durchsichtigem Material besteht.

5. Ein Cockpit (5), gemäß jedweder der zuvor genannten Patentansprüche,
welches sich dadurch auszeichnet, dass eine Steuerung zur automatischen Anpassung der Durchsichtigkeit der Steuerung vorhanden ist, wobei diese Steuerung vom Piloten außer Kraft setzbar sein muss.

6. Ein Cockpit (5), gemäß jedweder der zuvor genannten Patentansprüche,
welches sich dadurch auszeichnet, dass zumindest ein virtuelles Bild durch Projektion auf den transparenten Bereich (1) der Erweiterungen (2, 3) des Instrumentenbretts (7) geworfen wird,
z. B. ein holografisches, ein konventionelles oder ein durch LED-, insbesondere durch OLED-Technologie produziertes, Bild.

7. Ein Cockpit (5), gemäß Patentanspruch 6,
welches sich dadurch auszeichnet, dass zumindest ein Teil des mindestens einen virtuellen Bilds eine Fokuseinstellung auf unendlich hat.

8. Ein Cockpit (5), gemäß jedweder der zuvor genannten Patentansprüche,
welches sich dadurch auszeichnet, dass der durchsichtige Bereich (1) der Erweiterungen (2, 3) des Instrumentenbretts (7) Touchscreen-Funktionen (4) enthält.

9. Ein Cockpit (5), gemäß jedweder der zuvor genannten Patentansprüche,
welches sich dadurch auszeichnet, dass sich der durchsichtige Bereich (1) der Erweiterungen (2, 3) des Instrumentenbretts (7) ausschließlich auf der Pilotenseite oder links und rechts von einem zentralen Bereich befindet.

10. Ein Cockpit (5), gemäß jedweder der zuvor genannten Patentansprüche,
welches sich dadurch auszeichnet, dass zumindest ein optisches Element zentral, im mittleren Bereich des Instrumentenbretts (7), angeordnet ist und Licht auf den durchsichtigen Bereich (1) des Instrumentenbretts (7) richtet.

## Revendications

1. Poste de pilotage (5) pour un aéronef, en particulier pour un hélicoptère, équipé d'un panneau d'instruments (7) comprenant les instruments, écrans et dispositifs de commande, et au moins un prolongement (2, 3) du panneau d'instruments (7), **caractérisé par le fait qu'**au moins un prolongement (2, 3) du panneau d'instruments (7) est ajouté latéralement au panneau d'instruments (7) et comprend au moins une zone partiellement transparente (1) et **par le fait que** la transparence de cette zone transparente (1) de ce prolongement (2,3) est réglable.

2. Poste de pilotage selon la revendication 1,
**caractérisé en ce qu'**au moins une partie de la zone transparente (1) du panneau d'instruments (7) comprend une plaque de verre.

3. Poste de pilotage selon la revendication 1 ou 2,
**caractérisé par le fait qu'**il est pourvu d'un pare-brise (6) comprenant au moins une partie de la zone transparente (1) du panneau d'instruments (7), celle-ci étant intégrée dans ce pare-brise (6).

4. Poste de pilotage selon la revendication 1,
**caractérisé par le fait que** la zone transparente (1) du panneau d'instruments (7) est réalisée en un matériau transparent, de préférence réglable électriquement.

5. Poste de pilotage selon l'une quelconque des revendications précédentes,
**caractérisé par le fait qu'**une commande est prévue pour le réglage automatique de la transparence, la commande pouvant être annulée par le pilote.

6. Poste de pilotage selon l'une quelconque des revendications précédentes,
**caractérisé par le fait qu'**au moins une image virtuelle est créée par projection sur la surface transparente (1) des prolongements (2, 3) du panneau d'instruments (7), par exemple de nature holographique, conventionnelle ou à LED, en particulier en technologie OLED.

7. Poste de pilotage selon la revendication 6,
**caractérisé par le fait qu'**au moins une partie d'au moins une image virtuelle est focalisée sur l'infini.

8. Poste de pilotage selon l'une quelconque des revendications précédentes,
**caractérisé par le fait que** des fonctions d'écran tactile sont prévues sur la surface transparente (1) des prolongements (2, 3) du panneau d'instruments (7).

9. Poste de pilotage selon l'une quelconque des revendications précédentes,
**caractérisé par le fait que** la zone transparente (1) des prolongements (2, 3) du panneau d'instruments (7) est disposée exclusivement du côté du pilote ou bien à gauche et à droite par rapport à une zone centrale.

10. Poste de pilotage selon l'une quelconque des revendications précédentes,
**caractérisé par le fait qu'**au moins un élément optique est disposé centralement dans une zone intermédiaire du panneau d'instruments (7) et envoie la lumière vers la zone transparente (1) du panneau d'instruments (7).
